# EUROPEAN PATENT APPLICATION

(11) **EP 3 017 996 A1**
(43) Date of publication of application: **11.05.2016**
(21) Application number: 14191897.9
(22) Date of filing: 05.11.2014
(51) Int. Cl.: B60L 15/32, B60L 9/00

(54) **Vehicle with a power distribution system and power distribution system**

(71) Applicant: ABB Technology AG, 8050 Zürich (CH)
(72) Inventor: Muelhauser, Adrian, 5300 Turgi (CH); Friedli, Thomas, 5400 Baden (CH); Chaudhuri, Toufann, 1110 Morges (CH)
(74) Representative: ABB Patent Attorneys

(57) **Abstract**

The invention relates to a power distribution system for a rail-bound vehicle (30) having a plurality of carriages (31); comprising:
- a number of converter modules (2) distributed over the plurality of carriages (31), wherein AC inputs of the number of converter modules (2) are serially coupled via interconnection lines (35) on one carriage and inter-carriage connection lines (36) for connection between carriages (31),
wherein each of the number of converter modules (2) comprises
o a single-phase solid-state AC/DC converter (21) providing the AC inputs,
o a DC/AC converter (22) coupled to the single-phase solid-state AC/DC converter (21);
o a medium frequency transformer (24) a primary side of which is coupled with the DC/AC converter (22); and
o an AC/DC converter (25) which is coupled to a secondary side of the medium frequency transformer (24) and provides a low-or medium-voltage DC power at a DC output;

- one or more loads (32) in each of the carriages (31) coupled with the DC outputs of one or more of the converter modules (2) of the respective carriage (31).

## Description

### Technical field

The present invention relates to power distribution for supplying several train carriages in an e.g. rail-bound vehicle with electrical energy.

### Related art

Common power distribution systems for electrically driven vehicles, such as trains, include a low-frequency transformer directly connected to an AC source, i.e. an AC catenary, supplying high-voltage AC power of about 15 to 25 kV. A low-frequency transformer, corresponding to a grid low-frequency transformer, serves for reducing voltage and for galvanically isolating the internal vehicle power system from the AC catenary. The transformed AC power is then supplied to a main mostly solid-state converter for converting the single-phase AC power provided by the output of the grid frequency transformer to a power-controlled three-phase AC power for the supply of energy consumers in the several train carriages.

Such a configuration is usually heavy-weighted and space-consuming due to the size of the necessary grid low-frequency transformer. There have been approaches to replace the grid low-frequency transformer by converters without any grid frequency input transformers, so-called input-transformer-less converters or power electronic traction transformers (PETT).

Document DE 10 2010 030 697 A1 discloses a converter with a network-sided supply device comprising power converter groups and an output power converter. The power converter groups are electrically connected in series at the network side and coupled with primary windings of a medium-frequency transformer. The medium-frequency transformer comprises a secondary winding that is electrically mounted in parallel with terminals of another output power converter. The output power converters are connected by switching devices that are connected in parallel or series on a direct current side.

Document DE 10 2010 039 699 A1 discloses a drive system with two partial power converter systems connected to an AC catenary. The load side is provided with a self-commutated converter to provide a three-phase AC power supplied to the traction motor.

Document DE 10 2010 039 640 A1 discloses a traction converter for use in railway applications having a number of AC/AC converters, each coupled with a respective primary side of a transformer, wherein a secondary side of the transformer is coupled with a respective load.

Document DE 102 04 219 A1 discloses a system including at least three subsystems, each comprising a supply-side DC inverter connected to a medium-frequency DC inverter, a medium-frequency transformer, a load-side medium-frequency DC inverter and a smoothing capacitor. The subsystems are connected in parallel or series on the supply side and in a star circuit at the load side to form a three-phase system

Document EP 0 952 030 A2 discloses a system having a number of drive groups, each comprising at least one drive motor and an input converter group. The drive groups are connected in series to a supply network. Each input converter group is associated with at least one transformer group which supplies the drive motors from the secondary sides via a drive converter. Each input converter group is also associated with at least one compensation circuit which manages a uniform load distribution at the input converter groups by electrically connecting the inputs of the drive converters. The system provides better efficiency and reduced weight compared to conventional circuits.

Document EP 1 226 994 A2 discloses an electronic circuit for use in power supply systems in railway vehicles having a primary converter composed of three primary converter sections connected in series and output lines connected to a respective one of the transformer primary windings.

Document EP 2 423 066 A2 discloses an energy distribution system for a train with a plurality of railcars having a common DC power bus line configured to allow power to be accommodated among the cars in the train. A power conversion device is provided which is configured to obtain power from the common DC bus line to drive a traction motor configured to drive wheels. Power is provided to the common DC bus line via an internal combustion engine, a generator configured to convert the driving force of the combustion engine to electricity, and a power converter configured to convert an output voltage from the main generator to DC voltage and to supply power to the common DC bus line.

It is an object of the present invention to provide a power distribution system for use in rail-bound vehicles with several carriages wherein the disadvantages of a DC link for distributing power across the carriages can be avoided. Particularly, weight and cost of a DC link as well as its losses induced by the necessary massive interconnection lines of the DC bus shall be avoided. Furthermore, it is an object to provide a better distribution of the weight of the power distribution system to help to fulfill the maximum axle weight limitations.

### Summary of the invention

This object has been achieved by the vehicle with several carriages comprising a power distribution system according to claim 1 and a power distribution system according to the further independent claim.

Further embodiments are indicated in the depending claims.

According to an aspect a vehicle, particularly rail-bound vehicle, having a plurality of carriages is provided; wherein a power distribution system is provided, comprising:
- a number of converter modules distributed over the plurality of carriages, wherein AC inputs of the number of converter modules are serially coupled via interconnection lines on one carriage and/or intercarriage connection lines for connection between carriages, wherein each of the number of converter modules comprise
   o a single-phase solid-state AC/DC converter providing the AC inputs,
   o a DC/AC converter coupled to the single-phase solid-state AC/DC converter , wherein the single-phase solid-state AC/DC converter is connected to
   o a medium frequency transformer a primary side of which is coupled with the DC/AC converter; and
   o an AC/DC converter which is coupled to a secondary side of the medium frequency transformer and provides a low-or medium-voltage DC power at a DC output;
- one or more loads in each of the carriages coupled with the DC outputs of one or more of the converter modules of the respective carriage.

One idea of the above power distribution system for the vehicle with several carraiges is to distribute the AC power across the carriages by configuring an input-transformer-less converter so that converter modules of the input-transformer-less converter are split across the carriages of the rail-bound vehicle. Instead of using a DC bus concept, the idea to use the high voltage AC bus for power distribution to the serially connected converter modules. Since the input-transformer-less converter is configured as a modular converter system having preferably identical converter modules connected in series on its inputs, it is possible to distribute the input-transformer-less converter over all carriages.

In contrast to prior art solutions, a main advantage of splitting the modules of the input-transformer-less converter onto the carriages is that a lightweight and simple medium-or high-voltage AC connection can be used to distribute the power across the carriages of the rail-bound vehicle. Thereby, the power can be very efficiently shared over the carriages.

Furthermore, at least one of the converter modules may be configured as a multiple converter module having a plurality of converter modules connected in parallel.

According to an embodiment, the DC outputs of at least two of the converter modules of one carriage may be interconnected in parallel via a DC bus link.

It may be provided that the DC outputs of converter modules of two or more carriages are interconnected in parallel via one or more DC interconnection links.

Moreover, the DC bus link may be coupled to a DC catenary or a DC supply source.

According to an embodiment serially coupled AC inputs may be coupled with an AC catenary.

The loads may comprise at least one of a motor converter an auxiliary converter an energy storage system and a generator.

According to a further aspect a power distribution system for a vehicle with several carriages is provided, comprising:
- a number of converter modules distributed over the plurality of carriages, wherein AC inputs of the number of converter modules are serially coupled via interconnection lines on one carriage and/or intercarriage connection lines for connection between carriages, wherein each of the number of converter modules comprise
   o a single-phase solid-state AC/DC converter providing the AC inputs,
   o a DC/AC converter coupled to the single-phase solid-state AC/DC converter , wherein the single-phase solid-state AC/DC converter is connected to
   o a medium frequency transformer a primary side of which is coupled with the DC/AC converter; and
   o an AC/DC converter which is coupled to a secondary side of the medium frequency transformer and provides a low-or medium-voltage DC power at a DC output;
- one or more loads in each of the carriages coupled with the DC outputs of one or more of the converter modules of the respective carriage.

### Brief description of the drawings

Embodiments are described in more detail in conjunction with the accompanying drawings in which:
- Figure 1: shows an input-transformer-less converter with a plurality of converter modules;
- Figure 2: schematically shows a power distribution system for a rail-bound vehicle with a plurality of carriages;
- Figure 3: shows a further configuration of a power distribution system for a rail-bound vehicle with the plurality of carriages;
- Figure 4: shows a further configuration of a power distribution system for a rail-bound vehicle with the plurality of carriages;
- Figure 5: shows a further configuration of a power distribution system for a rail-bound vehicle with the plurality of carriages;
- Figure 6: shows a further configuration of a power distribution system for a rail-bound vehicle with the plurality of carriages;
- Figure 7: shows a further configuration of a power distribution system for a rail-bound vehicle with the plurality of carriages; and
- Figure 8: shows a further configuration of a power distribution system for a rail-bound vehicle with the plurality of carriages.

### Description of embodiments

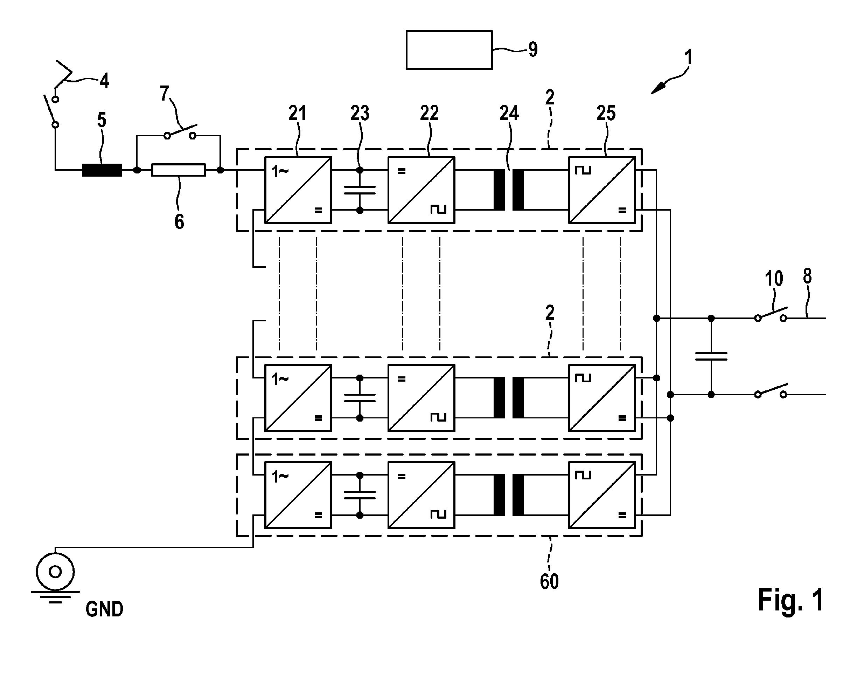

Figure 1 schematically shows a configuration of an input-transformer-less converter 1. The input-transformer-less converter 1 comprises a number of converter modules 2, each of which are configured with a plurality of stages, such as a single-phase solid-state AC/DC converter 21 which is connected to a DC/AC converter 22 via a low, medium-or high-voltage DC link 23. The output of the DC/AC converter 22 is connected to a primary side of a medium frequency transformer 24. A secondary side of the medium frequency transformer 24 is connected to an AC/DC converter 25 which provides a low-or medium-voltage DC power at the output of the converter module 2.

The inputs of the converter modules 2 are serially coupled and connected between a catenary 4 and a ground potential GND. Line inductor is illustrated as inductivity 5, and a start-up resistor 6 is provided which can be short-cut after start-up by a start-up switch 7.

The outputs of the converter modules 2 may be connected in parallel with a common DC bus 8. Switches 10 will be provided between the input-transformer-less converter 1 and the common DC bus 8 to couple or decouple the respective input-transformer-less converter 1 with or from the common DC bus 8.

There is further provided a control unit 9 for operating the input-transformer-less converter 1. Depending on the power required by the loads connected to the DC bus 8 such as a motor converter, a DC/AC converter for connecting a traction motor, an auxiliary converter, any kind of energy storage system or to a power generator or the like. The number of converter modules 2 to be actively operated may be selected by or provided to the control unit 9.

As the converter 1 inherently have a high efficiency at high loads, but a poorer efficiency at lower loads, it is preferred to either operate the converter 1 at a high load or fully deactivate or decouple one or more modules 2. In case of low energy consumption, e.g. while parking or during a hold station, usages of all modules 2 would therefore lead to a poor efficiency. The control unit 9 thus allows to combine a selected number of the converter modules 2 by switching these on or off on demand in order to solve the low load issue.

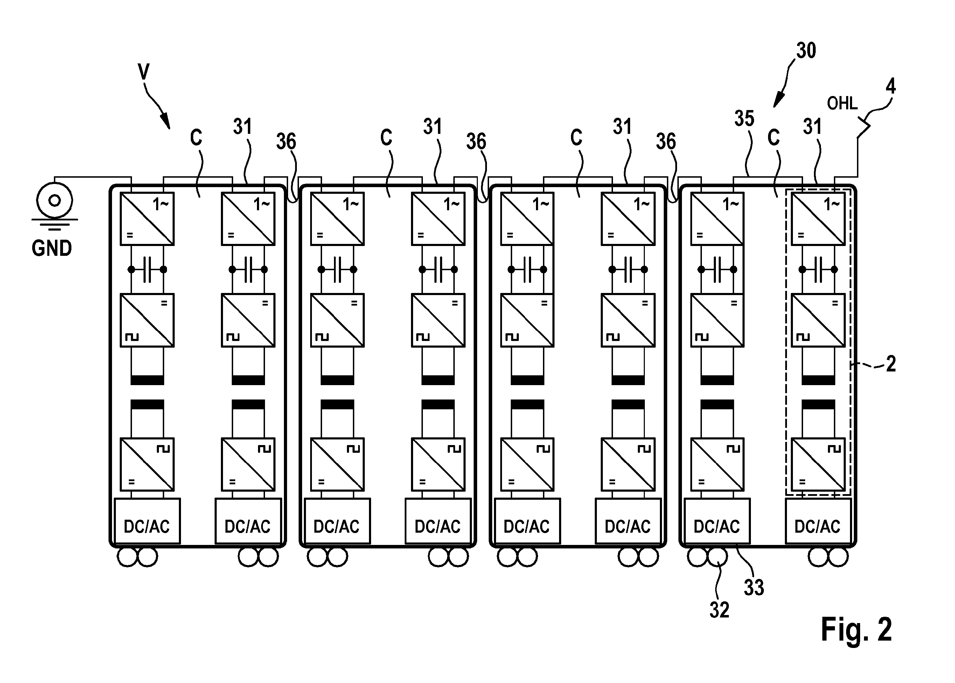

In Figure 2, it is shown an embodiment for using the converter 1 in a power distribution system for a rail-bound vehicle 30 with a plurality (in the present case four) of carriages 31. To distribute power across the carriages 31 of the rail-bound vehicle 30, the converter modules 2 of the converter 1 are split across the carriages 31. Particularly, for each traction motor 32 of each of the carriages 31, energized via a traction DC/AC converter 33, a separated converter module 2 is provided. The converter module 2 acts as a more or less independent converter, however, the inputs of the converter modules 2 are connected between a catenary 4 and a ground potential GND in a series connection.

Furthermore, interconnection lines 35 serve to serially connect several converter modules 2 within one carriage 31 while intercarriage connection lines 36 serve to connect two converter modules 2 between two carriages 31. So, converter modules 2 can be distributed over the carriages 31 of the rail-bound vehicle 30 according to energy needs of loads. In the present case, for each of the traction motors 32 and corresponding traction DC/AC converters 33, a single converter module 2 is provided. For different kind of loads, further converter modules 2 can be applied which may then be serially interconnected via additional interconnection line 35 on the respective carriage 31.

Basically, in each of the carriages 31, one or more of converter modules 2 can be used for separated loads, such as motor converters, auxiliary converters, energy storage systems, generator systems or the like.

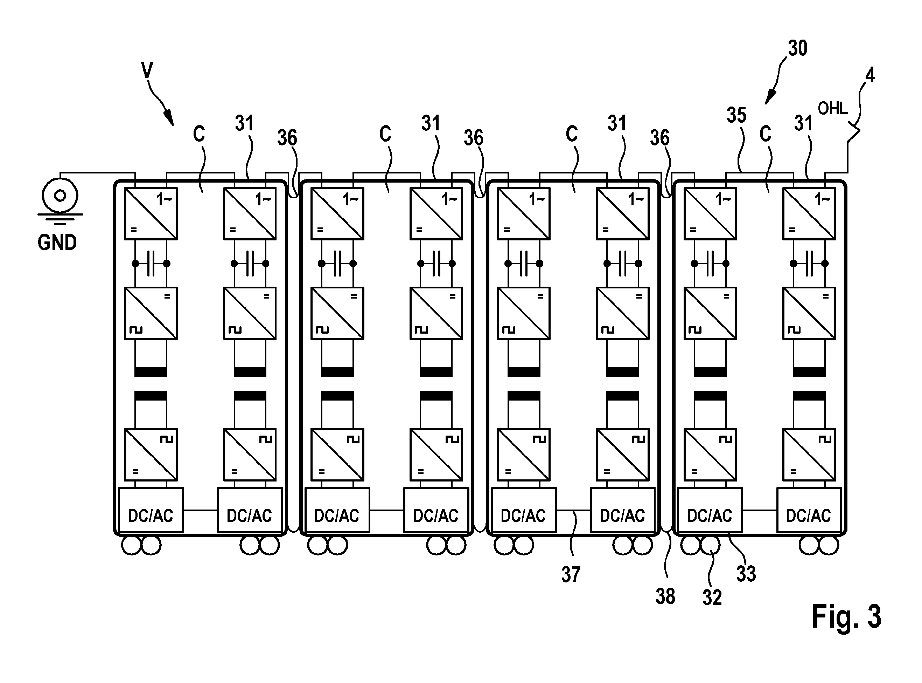

As power balance might be a problem, e.g. in a case of wheel slippage, the embodiment of Figure 3 provides a common DC bus link 37 which interconnects the outputs of the converter modules 2 within one carriage 31 and carriage DC interconnection links 38 to interconnect the DC bus links 37 of one carriage 31 with a DC bus link 37 of another carriage. The function of such a DC interconnection link 38 is that it is able to share a limited amount of power between the converter module 2 and between the carriages 31.

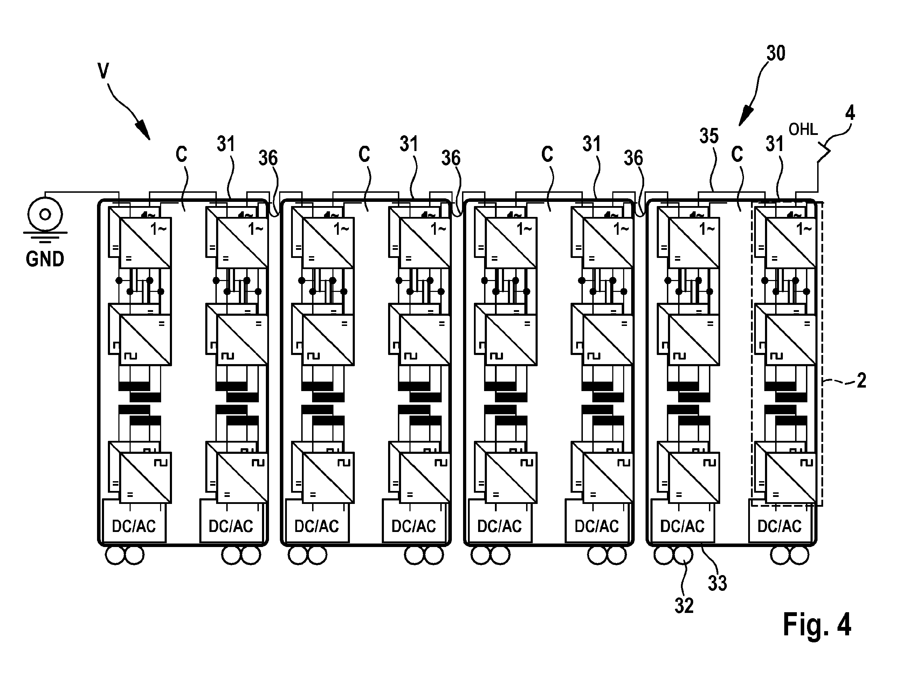

Furthermore, it is possible to provide each converter module 2 as a multiple converter module 2' as shown in Figure 4. While as it is provided above, all converter modules 2 are serially interconnected on its input sides, it might be necessary to provide a higher power to a respective load to couple two or more converter modules 2 as a multiple converter 2' at a place of a single converter module in parallel so as to increase power consumption of the respective multiple converter module 2'.

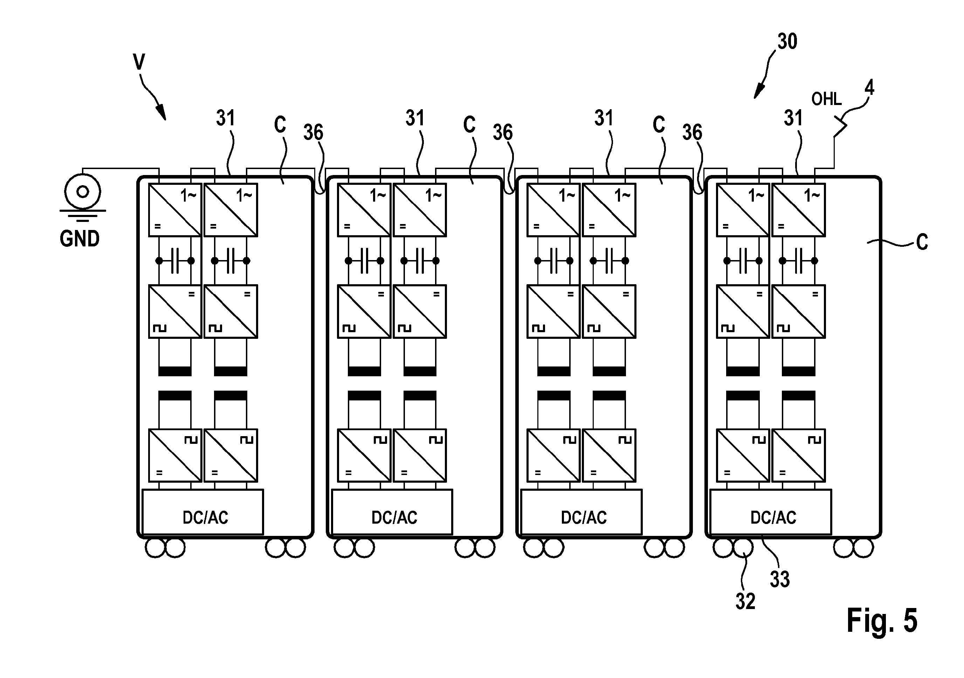

Furthermore, as it is shown in Figure 5, serially coupled multiple converter modules 2' can be interconnected on its output side to drive one single traction converter with or without a common DC bus link 37 within the carriage 31.

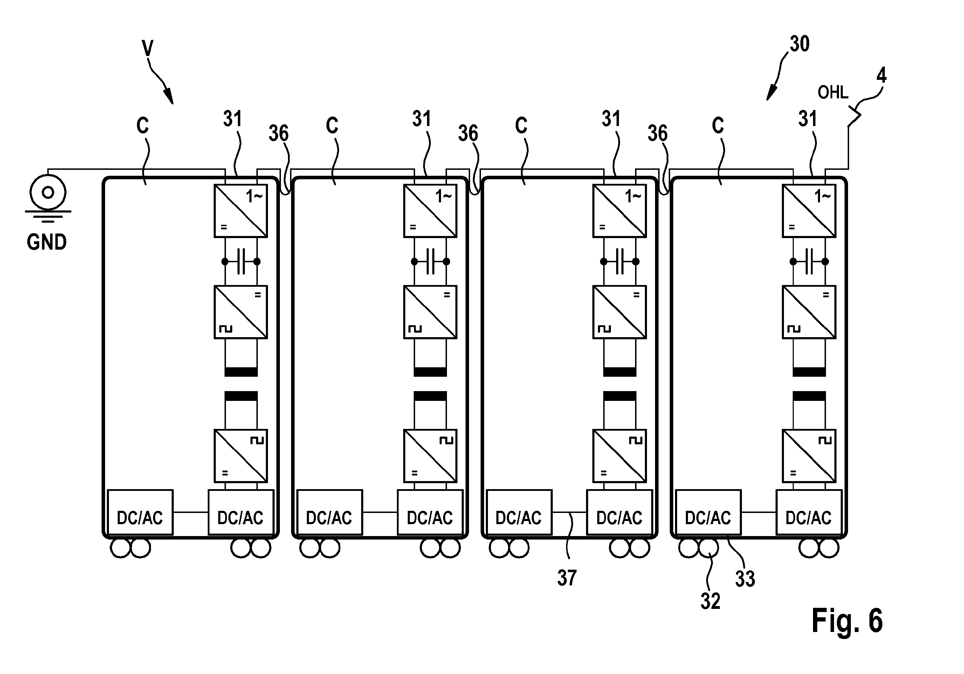

As shown in Figure 6, a common DC bus link 37 is applied. In such an embodiment the number of loads in one carriage 31 may be higher than the number of converter modules 2 required to provide the necessary power. Also a lower number of converter modules 2 can be applied within a single carriage, 31 the output of which is coupled with a common DC bus link 37 at which a higher number of loads, such as traction converters 33, can be connected.

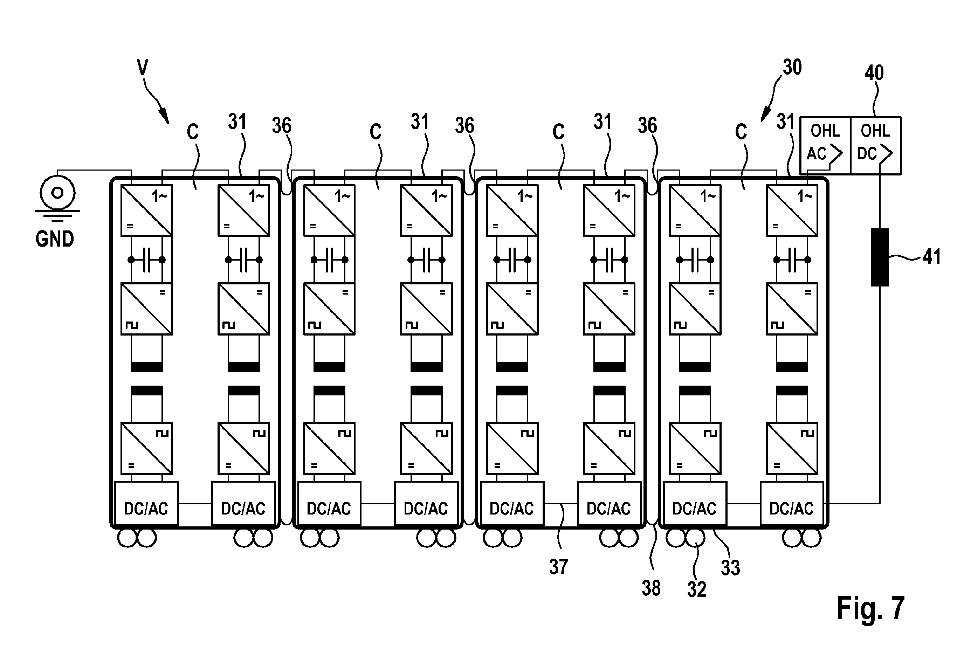

Furthermore, particularly for the embodiment of Figure 3, the carriage DC bus link 37 and the DC interconnection link 38 can be coupled with a DC catenary source 40 as shown in Figure 7. This allows two system operations wherein one catenary can be used to supply the AC line formed by the inputs of the converter modules 2 over the carriages 31 of the rail-bound vehicle 30, while a DC catenary source 40 can be used to supply directly the DC link via a DC line inductor 41.

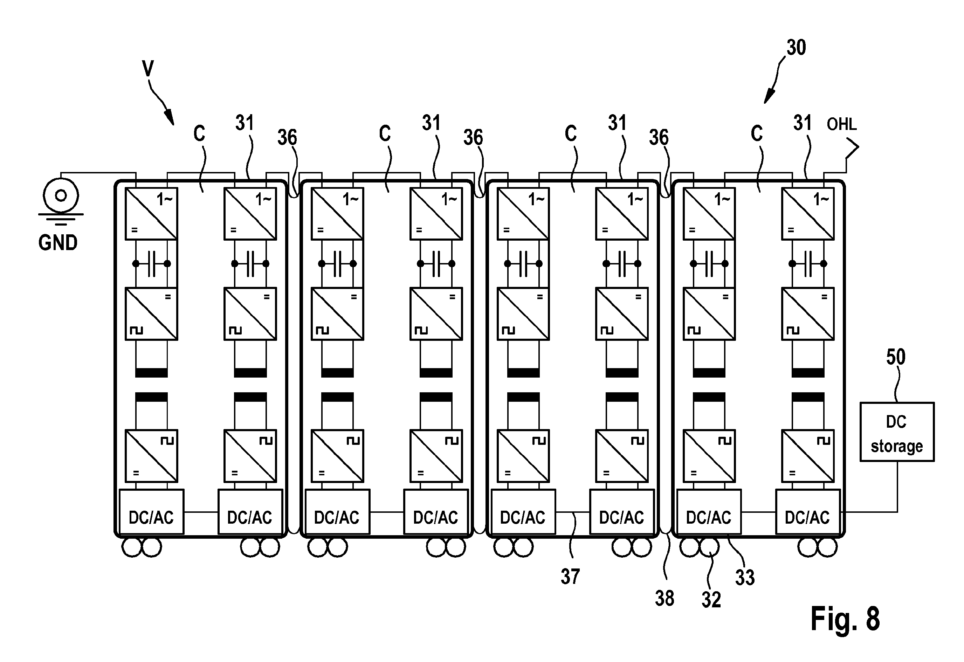

Furthermore, as shown in Figure 8 a DC supply 50 could also be provided from a central generator system or an energy storage system. The DC supply 50 could be connected with the DC bus formed by the DC bus link 37 and the DC interconnection links 38.

### Reference List

- 1: input-transformer-less converter
- 2: converter modules
- 21: AC/DC converter
- 22: DC/AC converter
- 23: low, medium-or high-voltage DC link
- 24: medium frequency transformer
- 25: AC/DC converter
- 4: catenary
- 5: inductivity
- 8: common DC bus
- 9: control unit
- 10: switches
- 30: railbound vehicle
- 31: carriages
- 32: traction motor
- 33: traction DC/AC converter
- 35: interconnection lines
- 36: inter-carriage connection lines
- 37: DC bus link
- 38: DC interconnection links
- 40: DC catenary source
- 41: DC line inductor
- 50: DC supply

## Claims

1. Vehicle (30), particularly rail-bound vehicle, having a plurality of carriages (31); wherein a power distribution system is provided comprising:
- a number of converter modules (2) distributed over the plurality of carriages (31), wherein AC inputs of the number of converter modules (2) are serially coupled via interconnection lines (35) on one carriage and inter-carriage connection lines (36) for connection between carriages (31),
wherein the converter modules (2) each comprise
o a single-phase solid-state AC/DC converter (21) providing the AC inputs,
o a DC/AC converter (22) coupled to the single-phase solid-state AC/DC converter (21);
o a medium frequency transformer (24) a primary side of which is coupled with the DC/AC converter (22); and
o an AC/DC converter (25) which is coupled to a secondary side of the medium frequency transformer (24) and provides a low-or medium-voltage DC power at a DC output;
- one or more loads (32) in each of the carriages (31) coupled with the DC outputs of one or more of the converter modules (2) of the respective carriage (31).

2. Vehicle (30) according to claim 1, wherein at least one of the converter modules (2) is configured as a multiple converter module having a plurality of converter modules (2) connected in parallel.

3. Vehicle (30) according to claim 1 or 2, wherein the DC outputs of at least two of the converter modules (2) of one carriage (31) are interconnected in parallel via a DC bus link (37).

4. Vehicle (30) according to claim 3, wherein the DC outputs of converter modules (2) of two or more carriages (31) are interconnect in parallel via one or more DC interconnection links (38).

5. Vehicle (30) according to claim 3 or 4, wherein the DC bus link (37) is coupled to a DC catenary or a DC supply source (50).

6. Vehicle (30) according to any of the claims 1 to 5, wherein serially coupled AC inputs are coupled with an AC catenary (4).

7. Vehicle (30) according to any of the claims 1 to 6, wherein the loads comprise at least one of a motor converter (33), an auxiliary converter an energy storage system and a generator.

8. Vehicle (30) according to any of the claims 1 to 7, wherein the converter modules (2) are identical.

9. Power distribution system for a rail-bound vehicle (30) having a plurality of carriages (31); comprising:
- a number of converter modules (2) distributed over the plurality of carriages (31), wherein AC inputs of the number of converter modules (2) are serially coupled via interconnection lines (35) on one carriage and inter-carriage connection lines (36) for connection between carriages (31),
wherein the converter modules (2) each comprise
o a single-phase solid-state AC/DC converter (21) providing the AC inputs,
o a DC/AC converter (22) coupled to the single-phase solid-state AC/DC converter (21);
o a medium frequency transformer (24) a primary side of which is coupled with the DC/AC converter (22); and
o an AC/DC converter (25) which is coupled to a secondary side of the medium frequency transformer (24) and provides a low-or medium-voltage DC power at a DC output;
- one or more loads (32) in each of the carriages (31) coupled with the DC outputs of one or more of the converter modules (2) of the respective carriage (31).
